# DEMANDE DE BREVET EUROPEEN

(11) **EP 3 299 103 A1**
(43) Date de publication de la demande: **28.03.2018**
(21) Numéro de dépôt: 17183021.9
(22) Date de dépôt: 25.07.2017
(51) Int. Cl.: B23D 17/06, B23D 29/00, B23D 31/00, B23D 35/00, A62B 3/00

(54) **ENSEMBLE AUTONOME POLYVALENT À COMMANDE HYDRAULIQUE**

(30) Priorité: 21.09.2016 FR 1658843
(71) Demandeur: HYDR'AM, 69720 Saint Bonnet de Mure (FR); Armand, Michel, 69330 Jonage (FR)
(72) Inventeur: ARMAND, Michel, 69330 JONAGE (FR)
(74) Mandataire: Cabinet Laurent & Charras

(57) **Abrégé**

Cet ensemble autonome polyvalent à commande hydraulique intègre un vérin hydraulique dont la tige actionne un outil constitué de deux lames (3, 4) (cisaille ou bras écarteurs), articulées autour d'un ou de deux axes (5) monté(s) sur une chape (2) solidaire du corps (6) du vérin, l'ouverture et la fermeture ou le rapprochement et l'écartements desdites lames ou bras (3, 4) étant provoqués au moyen d'un système à biellettes commandé directement par la tige du vérin, ledit vérin étant actionné par un groupe hydraulique constitué d'une pompe elle-même alimentée électriquement par une batterie et stockée dans une coque (1).

Le corps (6) du vérin est monté rotatif de manière discrète par rapport à la coque (1).

## Description

### DOMAINE DE L'INVENTION

La présente invention concerne un ensemble autonome polyvalent à commande hydraulique, et plus particulièrement une cisaille, notamment de découpe des tôles et de désincarcération, ou un écarteur, voire un outil combiné, c'est-à-dire de manière générale des dispositifs utilisés pour réaliser le démantèlement d'installations, réaliser des découpes dans les tôles ou les profilés d'épaisseurs appréciables.

Elle concerne plus particulièrement de tels ensembles présentant une autonomie par rapport à un groupe de pression hydrauliques ; en d'autres termes de tels ensembles sont munis de leur groupe de pression hydraulique intégré.

### ÉTAT ANTERIEUR DE LA TECHNIQUE

Les cisailles ou écarteurs sont aujourd'hui largement connus et mis en oeuvre dans les domaines précités.

Depuis longtemps déjà, on a cherché à s'affranchir de l'alimentation en fluide hydraulique des outils concernés à partir d'une source indépendante en raison de leur inadaptation lorsque de tels outils doivent être mis en oeuvre dans des zones d'accès difficile.

En outre, de tels outils doivent fonctionner dans les deux sens, c'est-à-dire respectivement en rapprochant les lames de la cisaille ou les bras de l'écarteur et respectivement en les écartant, c'est-à-dire susceptibles de fonctionner de manière réversible, et ce avec la même efficacité.

De fait, afin de s'affranchir de ces difficultés, on a proposé dans le document EP 0 519 845 un tel ensemble autonome polyvalent à commande hydraulique intégrant son propre groupe hydraulique.

Incontestablement, l'ensemble décrit dans ce document constitue une amélioration significative par rapport à l'état antérieur de la technique, puisqu'il permet, à partir d'une conception simple, de présenter une grande efficacité tout en permettant de disposer d'une action réversible de l'outil.

En d'autres termes, ce document décrit un outil portable, qu'il s'agisse d'une cisaille ou d'un écarteur, permettant d'intervenir sur n'importe quel site.

Cependant, les conditions d'utilisation d'un tel outil portable ne sont pas toujours optimum, notamment en termes de facilité d'orientation de l'outil d'une part, de son poids relatif d'autre part, et enfin des conditions de sécurité quant à cette utilisation.

En effet, l'outil proprement dit, qu'il s'agisse d'une cisaille, d'un écarteur ou d'un outil combiné, présente une orientation fixe par rapport à l'ensemble autonome, et notamment par rapport à la coque intégrant le groupe hydraulique qui, nonobstant le caractère portable de l'ensemble présent un encombrement et un poids conséquents.

La présente invention vise à drastiquement faciliter les conditions d'utilisation d'un tel outil.

### EXPOSE DE L'INVENTION

A cet effet, l'invention vise un ensemble autonome polyvalent à commande hydraulique intégrant un vérin hydraulique dont la tige actionne un outil constitué de deux lames (cisaille ou bras écarteurs), articulée autour d'un ou de deux axes monté(s) sur une chape solidaire du corps du vérin, l'ouverture et la fermeture ou le rapprochement et l'écartements desdites lames ou bras étant provoqués au moyen d'un système à biellettes commandé directement par la tige du vérin, ledit vérin étant actionné par un groupe hydraulique constitué d'une pompe elle-même alimentée électriquement par une batterie et stockée dans une coque.

Selon l'invention, le corps du vérin est monté rotatif par rapport à la coque. Ainsi donc, il devient possible pour l'utilisateur d'orienter l'outil proprement dit par rapport à la coque en fonction des conditions d'intervention. Avantageusement, cette orientation peut être multiple et notamment présenter une variation angulaire discrète sur 360°.

Cette rotation est rendue possible au moyen d'une platine solidarisée à la base du corps du vérin, présentant des évidements orientés radialement, lesdits évidements étant aptes à coopérer avec un doigt d'indexation monté au sein de la coque et actionnable par un bouton poussoir ou système équivalent par l'utilisateur.

Les différents évidements sont ménagés selon une couronne à intervalles réguliers, dont le pas est fonction du nombre d'orientations souhaitées par le constructeur.

### DESCRIPTION DES FIGURES

La manière dont l'invention peut être réalisée et les avantages qui en découlent, ressortiront mieux de l'exemple de réalisation qui suit, donné à titre indicatif et non limitatif à l'appui des figures annexées.
Les figures 1 et 2 sont deux représentations schématiques en perspective d'un écarteur conforme à l'invention selon deux orientations différentes de l'écarteur proprement dit par rapport à la coque intégrant le groupe hydraulique.
Les figures 3 et 4 sont des vues schématiques en section longitudinale partielle de l'ensemble hydraulique conforme à l'invention.
La figure 5 est une vue schématique en perspective partielle illustrant en vue de trois quarts, les moyens particuliers permettant d'assurer la rotation de l'outil par rapport à la coque.
La figure 6 est une représentation schématique en plan de la platine conforme à un exemple de réalisation de l'invention.
La figure 7 est une représentation schématique en plan de la base du corps du vérin, dans laquelle est reçue la platine de la figure 6.
La figure 8 est une vue schématique en section de la base du corps du vérin, correspondant à la figure 7.

### DESCRIPTION DETAILLEE DE L'INVENTION

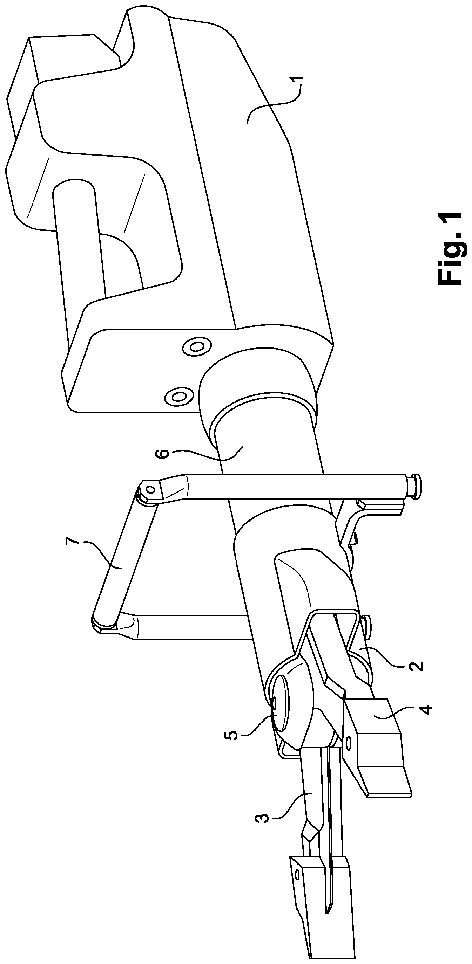

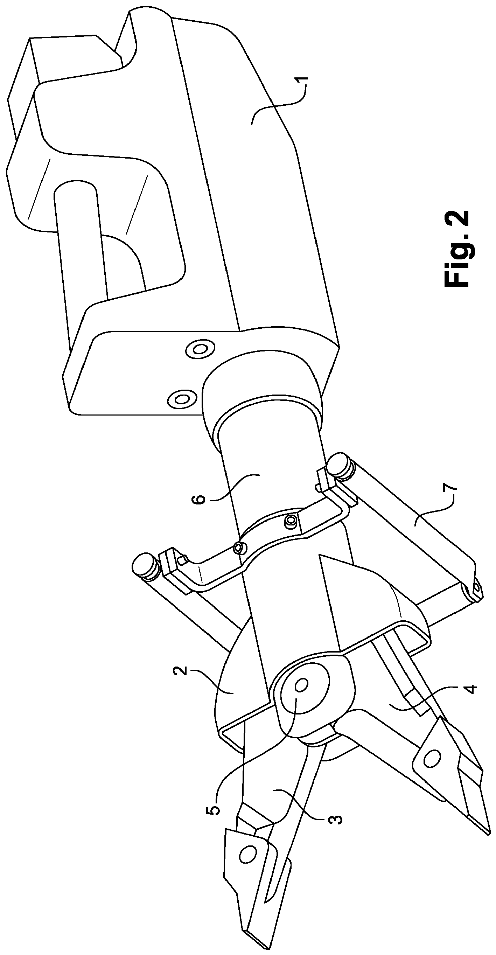

On a donc représenté en relation avec les figures 1 et 2 des vues schématiques en perspective, en l'espèce d'une cisaille à alimentation hydraulique autonome, et ce avec deux orientations différentes de la cisaille proprement dite par rapport à la coque (1), cette dernière intégrant notamment le groupe de pression hydraulique.

Classiquement, la coque (1) intègre comme déjà dit, le groupe de pression hydraulique, ce de manière connue. A cet égard on pourra utilement se reporter à la description du document précité EP 0 519 845.

Succinctement, la coque (1) intègre le réservoir du fluide hydraulique, en l'espèce de l'huile, la pompe proprement dite ainsi qu'une batterie alimentant électriquement ladite pompe.

Ce groupe de pression hydraulique est destiné à actionner un vérin, dont on a représenté le corps (6) au sein des figures 1 et 2.

L'outil proprement dit, en l'espèce la cisaille, est constituée de lames (3) et (4), articulées sur un axe d'articulation commun (5) montée sur une chape (2). Dans le cas d'écarteurs, les deux bras de ce dernier sont articulés sur deux axes, également montés sur la chape (2).

Un système de biellettes, là encore décrit par exemple dans le document précité, permet d'actionner lesdites lames (3) et (4). En l'espèce, ce système de biellettes permet de rapprocher ou d'écarter l'une de l'autre lesdites lames par rapport à l'axe d'articulation (5) sous l'action de la tige (10) du vérin.

Enfin, une poignée (7) est solidarisée sur la chape afin de permettre à l'opérateur d'orienter correctement l'opération de découpe lorsque cela est requis.

On observe ainsi une orientation différente de la cisaille (3, 4) par rapport à la coque (1) entre les figures 1 et 2, en l'espèce une orientation angulaire de 100° de l'une par rapport à l'autre.

C'est le résultat que cherche à obtenir l'ensemble autonome de l'invention, ce afin de faciliter le travail de l'opérateur sur site.

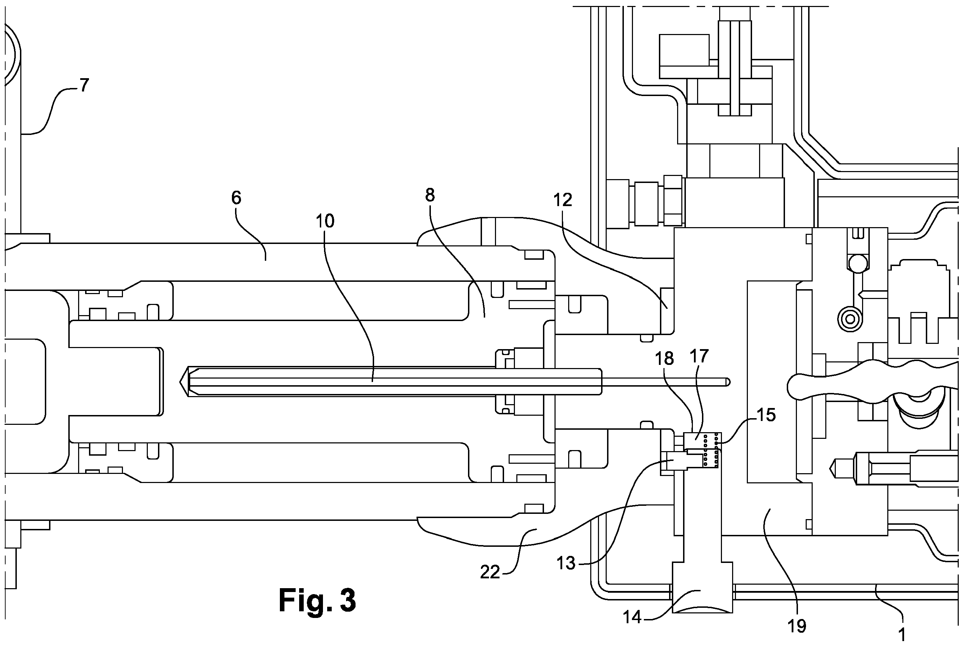

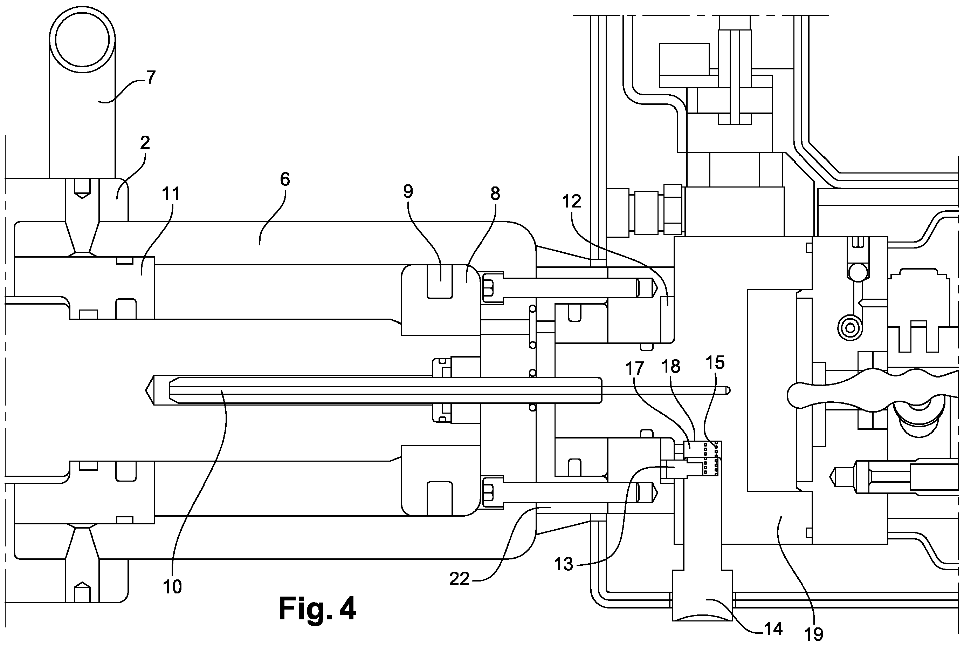

On a représenté de manière schématique sur les figures 3 et 4 une section longitudinale de deux modes de réalisation distincts de l'invention.

Au sein de ces figures ont été représentés de manière plus précise des différents éléments permettant d'assurer la rotation de l'outil proprement dit par rapport à la coque.

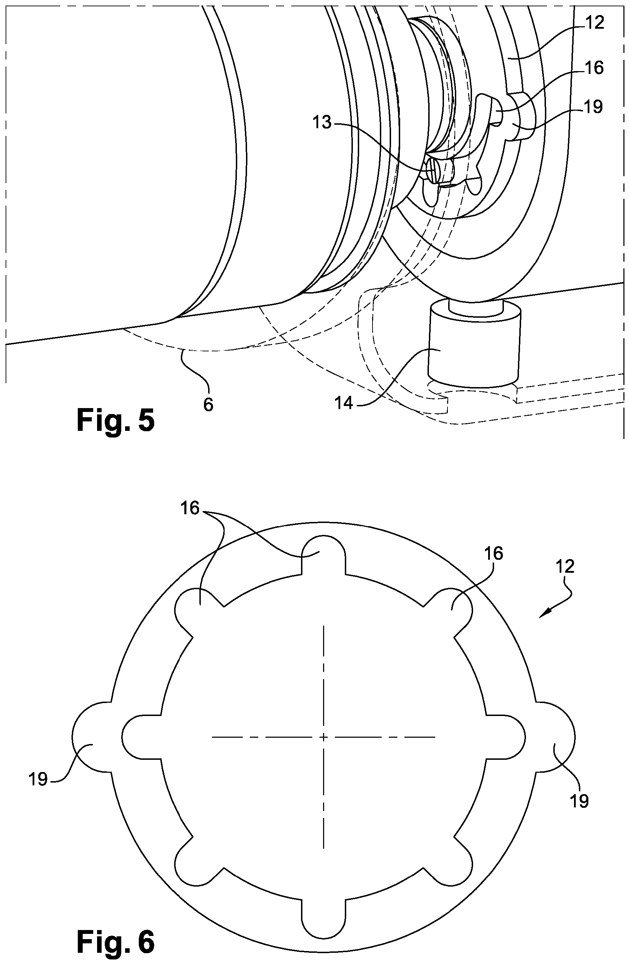

En l'espèce, la partie rotative de l'ensemble est fondamentalement constituée par le corps du vérin (6), et par les éléments de fixation du corps du vérin sur la coque, ces éléments de fixation étant solidarisés à une platine (12) positionnée autour du système d'alimentation du piston (8) du vérin en fluide hydraulique, décrit plus en détail en relation avec les figures 6 à 8..

Ce piston (8) a été schématisé à l'intérieur du corps (6) du vérin, ledit piston étant muni notamment d'un joint torique (9) assurant l'étanchéité par rapport à la paroi interne du corps du vérin.

On a également représenté par la référence (10) la tige du vérin apte à actionner le système de biellettes (non représentée) assurant l'écartement et le rapprochement des lames (3) et (4) de la cisaille.

Cette tige coopère avec un guide tige (11) positionné sensiblement au voisinage du lieu de fixation de la poignée (7) sur la chape (2).

Plus spécifiquement, ainsi qu'on peut l'observer sur les figures 5 et 6, la platine (12), en forme de couronne, est munie d'un certain nombre d'évidements (16) orientés radialement à partir sensiblement du diamètre interne de ladite couronne.

Ces évidements (16) sont destinés à coopérer avec un doigt d'indexation ou de verrouillage (13), susceptible d'être animé d'un mouvement de translation parallèle à un diamètre de la couronne (12), sous l'action d'un bouton-poussoir (14) faisant saillie par rapport à la coque (1) (voir figures 3 et 4), et actionnable par l'opérateur. Le doigt (13) est solidaire du bouton poussoir (15).

En l'absence de contraintes, c'est-à-dire d'action de l'opérateur, le bouton-poussoir (14) est soumis à l'action d'un ressort (15) prenant appui contre la paroi (18) d'un usinage (17) réalisé dans la pièce support de pompe (19) intégré dans la coque (1), ledit ressort (15) poussant le bouton poussoir (14) en direction de l'extérieur de la coque (1).

Au sein de la figure 5, on a représenté trois évidements radiaux (16) de la platine (12). Il est cependant dans l'esprit de la présente invention que ces évidements peuvent être multiples et agencés sur toute la platine (12), tel que représenté au sein de la figure 6, selon un pas périodique ou non afin de permettre l'orientation souhaitée de l'outil par rapport à la coque.

On a représenté en relation avec la figure 6, la platine (12) selon une forme de réalisation de l'invention. Cette platine (12), en forme de couronne, présente donc une pluralité d'évidements radiaux (16), en l'espèce répartis de manière régulière et périodique, et séparés deux à deux d'un angle de 45 °.

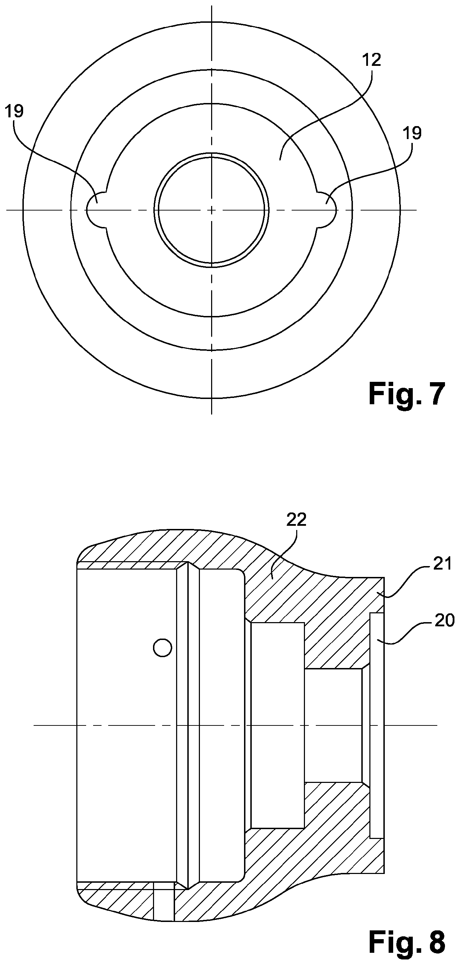

La platine (12) comporte en outre deux excroissances coplanaires, émergeant de son périmètre externe, et destinés à venir se loger dans des évidements complémentaires (non représentés), ménagés dans la face interne (21) de la base (22) du corps du piston (voir figure 8).

Cette base (21) présente elle-même un usinage (20), justement destiné à recevoir la platine (12).

On conçoit dès lors, que lorsque le doigt de verrouillage (13) est dégagé de l'un des évidements radiaux (16) sous l'action du bouton poussoir (14), la platine (12) se trouve elle-même libre de tourner, et corollairement le corps du vérin et l'outil proprement dit, jusqu'à obtenir l'orientation souhaitée par l'opérateur, qui n'agit plus alors sur le bouton poussoir.

On conçoit qu'avec un tel ensemble autonome, il devient beaucoup plus aisé pour l'opérateur d'utiliser l'outil en question, puisque par simple pression sur le bouton-poussoir (14), il peut choisir l'orientation souhaitée de l'outil par rapport à la coque et donc optimiser son action.

## Revendications

1. Ensemble autonome polyvalent à commande hydraulique intégrant un vérin hydraulique dont la tige (10) actionne un outil constitué de deux lames (3, 4) (cisaille ou bras écarteurs), articulées autour d'un ou de deux axes (5) monté(s) sur une chape (2) solidaire du corps (6) du vérin, l'ouverture et la fermeture ou le rapprochement et l'écartements desdites lames ou bras (3, 4) étant provoqués au moyen d'un système à biellettes commandé directement par la tige (10) du vérin, ledit vérin étant actionné par un groupe hydraulique constitué d'une pompe elle-même alimentée électriquement par une batterie et stockée dans une coque (1), ***caractérisé* en ce que** le corps (6) du vérin est monté rotatif de manière discrète par rapport à la coque (1).

2. Ensemble autonome polyvalent à commande hydraulique selon la revendication 1, ***caractérisé* en ce que** la rotation du corps du vérin par rapport à la coque est réalisable de manière discrète sur 360°.

3. Ensemble autonome polyvalent à commande hydraulique selon l'une des revendications 1 et 2, ***caractérisé* en ce que** le corps du vérin est solidarisé à une platine ou couronne (12), reçue au niveau de la base (22) du corps du vérin, présentant des évidements (16) orientés radialement, lesdits évidements étant aptes à coopérer avec un doigt d'indexation ou de verrouillage (13) monté au sein de la coque et actionnable par un bouton poussoir ou système équivalent (14) auquel il est solidaire, par l'utilisateur.

4. Ensemble autonome polyvalent à commande hydraulique selon la revendication 3, ***caractérisé* en ce que** les différents évidements (16) sont ménagés à intervalles réguliers, dont le pas est fonction du nombre d'orientations souhaitées de l'outil par rapport à la coquer.
